(19) Europäisches Patentamt
European Patent Office
Office européen des brevets

(11) **EP 4 703 324 A1**

(12) **EUROPEAN PATENT APPLICATION**

(43) Date of publication:
**04.03.2026   Bulletin 2026/10**

(21) Application number: **25197550.4**

(22) Date of filing: **22.08.2025**

(51) International Patent Classification (IPC):
**C01B 25/45** (2006.01)        **H01M 4/48** (2010.01)
**H01M 10/0525** (2010.01)

(52) Cooperative Patent Classification (CPC):
**C01B 25/45; H01M 4/48; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.08.2024   KR 20240114918**

(71) Applicant: **ECOPRO BM CO., LTD.
Cheongju-si, Chungcheongbuk-do 28116 (KR)**

(72) Inventors:
• **CHUN, Yu Gyeong
Cheongju-si, Chungcheongbuk-do 28116 (KR)**

• **KONG, Bo Hyun
Cheongju-si, Chungcheongbuk-do 28116 (KR)**
• **LEE, Joung Hee
Cheongju-si, Chungcheongbuk-do 28116 (KR)**
• **KIM, Ji Won
Cheongju-si, Chungcheongbuk-do 28116 (KR)**
• **LEE, Jeong Mog
Cheongju-si, Chungcheongbuk-do 28116 (KR)**
• **LYU, Dong Hyun
Cheongju-si, Chungcheongbuk-do 28116 (KR)**
• **KIM, Min Ji
Cheongju-si, Chungcheongbuk-do 28116 (KR)**

(74) Representative: **Vossius & Partner
Patentanwälte Rechtsanwälte mbB
Siebertstrasse 3
81675 München (DE)**

(54) **POSITIVE ELECTRODE ACTIVE MATERIAL**

(57)    The present disclosure relates to a positive electrode active material for a lithium secondary battery, and more particularly, to a positive electrode active material for a lithium secondary battery having excellent electrical conductivity and energy density, and to a positive electrode and a secondary battery comprising the same.

**Description**

BACKGROUND

**1. Field of the Invention**

The present disclosure relates to a positive electrode active material for a lithium secondary battery, and more particularly, to a positive electrode active material for a lithium secondary battery that exhibits excellent electrical conductivity and energy density and can be produced in an environmentally friendly way.

**2. Discussion of Related Art**

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

Various materials are used as a positive electrode active material of a lithium secondary battery, and among them, lithium metal phosphate, such as lithium iron phosphate ($LiFePO_4$), is widely used to manufacture lithium secondary batteries because $LiFePO_4$ has excellent stability and the ability to withstand many charge/discharge cycles with a relatively low manufacturing cost.

However, lithium iron phosphate has the disadvantage of low operating voltage and energy density. To address these drawbacks, lithium manganese iron phosphate (LMFP), in which a portion of the iron is substituted with manganese, has been proposed. However, lithium manganese iron phosphate has the problem of low lithium-ion diffusion rate and poor electronic conductivity.

Meanwhile, conventional positive electrode active materials are prepared by first synthesizing a precursor, followed by the addition of lithium and a calcination process. In this process, due to components present in the raw materials used for precursor synthesis, pollutants such as SOx and NOx are generated. Moreover, since lithium is added after the precursor is synthesized and then dehydrated or dried, this approach is disadvantageous in terms of energy consumption and yield.

SUMMARY OF THE INVENTION

In the lithium secondary battery market, the growth of lithium secondary batteries for electric vehicles is driving the market, and the demand for positive electrode active materials used in lithium secondary batteries is also continuously changing. In particular, there is a growing demand to minimize costs in the production of positive electrode active materials.

At the same time, the market is demanding positive electrode active materials with higher energy density and superior conductivity.

In order to satisfy market demand, the present disclosure aims to provide a positive electrode active material that is environmentally friendly and exhibits excellent energy density and electronic conductivity, without requiring a separate precursor synthesis process.

In addition, the present disclosure aims to provide a lithium secondary battery that uses the positive electrode defined herein.

The objectives and advantages described herein are not limited to those mentioned above. Additional objects and benefits will be apparent from the following detailed description and the accompanying examples. The objectives and advantages may be achieved by means disclosed in the claims and combinations thereof.

According to an aspect of the present disclosure, there is provided a positive electrode active material for a lithium secondary battery, comprising a lithium composite compound capable of lithium intercalation and deintercalation, wherein the lithium composite compound comprises Fe and Mn, wherein the lithium composite compound comprises a plurality of particulate materials, and wherein an $Fe_2P$ phase is present in at least a partial region of the particulate materials.

Preferably, the particulate materials may have an average particle diameter of 0.01 to 5 μm.

Preferably, 50 wt% or more of the total $Fe_2P$ phase contained in the positive electrode active material may be located inside the particulate materials.

Preferably, the content of the $Fe_2P$ phase may be 0.2 to 0.9 wt% based on 100 wt% of the lithium manganese iron phosphate phase included in the lithium composite compound.

Preferably, wherein the particulate materials may be obtained by pulverizing a non-pulverized lithium composite compound comprising, from the core to the surface: a first region in which Fe is present but Mn is not present; a second region having a mixed structure of Fe and Mn; and a third region in which Mn is present but Fe is not present.

Preferably, in the non-pulverized lithium composite compound, the $Fe_2P$ phase may be present in at least a portion of the first region and the second region.

Preferably, the combined thickness of the second region and the third region may be 0.5 to 2.0 $\mu$m.

Preferably, the total content of the $Fe_2P_2O_7$ phase and the $Mn_2P_2O_7$ phase in the particulate materials may be 2.5 wt% or less, based on 100 wt% of the lithium manganese iron phosphate phase included in the lithium composite compound.

Preferably, the content of the $Mn_2P_2O_7$ phase in the particulate materials may be 2.5 wt% or less, based on 100 wt% of the lithium manganese iron phosphate phase included in the lithium composite compound.

Preferably, the particulate materials may satisfy at least one of the following conditions represented by Equations 1 to 3:

$$[\text{Equation 1}]$$

$$28.10 \ \text{Å}^2 \leq A_p \leq 28.74 \ \text{Å}^2$$

$$[\text{Equation 2}]$$

$$62.40 \ \text{Å}^2 \leq B_p \leq 63.10 \ \text{Å}^2$$

$$[\text{Equation 3}]$$

$$48.50 \ \text{Å}^2 \leq C_p \leq 49.20 \ \text{Å}^2$$

where $A_p$ to $C_p$ in Equations 1 to 3 may be calculated according to the following Equations 1' to 3':

$$[\text{Equation 1'}]$$

$$A_p = V_c/l_a$$

$$[\text{Equation 2'}]$$

$$B_p = V_c/l_b$$

$$[\text{Equation 3'}]$$

$$C_p = V_c/l_c$$

In Equations 1' to 3', $V_c$ may the unit cell volume of the particulate material, and $l_a$, $l_b$, and $l_c$ may represent the diameters along the a-axis, b-axis, and c-axis of the particulate material, respectively.

Preferably, the lithium composite compound may be represented by Chemical Formula 1 below:

[Chemical Formula 1]     $Li_pFe_{1-x-y}Mn_xA_yA'_zP_{1-z}O_w$

where A is at least one element selected from the group consisting of Ag, Al, As, Au, Ba, Be, Bi, Ca, Cd, Ce, Co, Cr, Cu, Ga, Hf, In, K, La, Mg, Mo, Na, Nb, Nd, Ni, Os, Pd, Pr, Pt, Rh, Ru, Sm, Sn, Sr, Ta, Ti, V, W, Y, Zn, and Zr, A' is at least one element selected from the group consisting of C, Si, S, N, B, F, Cl, and I, and $0.5 \leq p \leq 1.5$, $0 < x < 1$, $0 \leq y < 1$, $0 \leq z < 1$, $0 < w \leq 4$.

Preferably, at least a portion of the particulate materials may have an amorphous carbon coating layer with a thickness of 1 to 500 nm formed on at least a part of the surface.

According to still another aspect of the present disclosure, there is provided a positive electrode including the positive electrode active material.

According to yet another aspect of the present disclosure, there is provided a lithium secondary battery using the positive electrode.

BRIEF DESCRIPTION OF THE DRAWINGS

The objects, features, and advantages of the present disclosure will become more apparent from the following description of exemplary embodiments with reference to the accompanying drawings, in which:

FIG. 1 is a schematic view showing the elemental concentration according to position in a positive electrode active material according to an aspect of the present disclosure;
FIG. 2 shows an SEM image of a positive electrode active material according to an embodiment of the present disclosure.

DETAILED DESCRIPTION OF EXEMPLARY EMBODIMENTS

For a better understanding of the present disclosure, certain terms are defined herein for convenience. Unless otherwise defined herein, scientific and technical terms used in the present disclosure shall have the meanings commonly understood by those skilled in the art. In addition, unless otherwise specified in the context, the singular shall be understood to include the plural, and the plural shall be understood to include the singular.

Hereinafter, a method of preparing a positive electrode active material for a lithium secondary battery according to the present disclosure, a positive electrode including the positive electrode active material prepared thereby, and a lithium secondary battery using the positive electrode will be described in more detail.

Method of preparing positive electrode active material for lithium secondary battery

According to an aspect of the present disclosure, a method for manufacturing a positive electrode active material for a lithium secondary battery may comprise: (a) preparing a slurry comprising an Fe-P composite by reacting an iron-based raw material with a phosphate-based raw material; (b) preparing a slurry comprising an Fe-Mn-P composite by reacting a manganese-based raw material with the Fe-P composite; (c) obtaining a powder by adding a lithium-based raw material and a carbon-based raw material to the slurry and then drying the resulting mixture; and (d) obtaining a lithium composite compound by heat-treating the powder.

In conventional methods for preparing phosphate-based lithium composite compounds, a precursor in the form of a phosphate is prepared using a sulfate or nitrate as a raw material, followed by addition of lithium and calcination to manufacture a positive electrode active material.

However, such methods result in energy and yield losses during the dehydration and drying processes in precursor preparation. In addition, they suffer from the problem of generating harmful substances such as SOx and NOx.

In contrast, the manufacturing method according to an aspect of the present disclosure does not generate harmful substances such as SOx or NOx and omits unnecessary dehydration and drying processes, thereby providing an environmentally friendly method capable of producing a positive electrode active material of equal or superior quality.

Furthermore, the manufacturing method according to an aspect of the present disclosure can suppress the formation of $M_2P_2O_7$ (M = Fe or Mn) impurity phases.

During calcination, if the M-P phase is unstable and the reactivity with lithium is reduced, $M_2P_2O_7$ impurity phases may be generated. These $M_2P_2O_7$ impurity phases act as resistive components, thereby deteriorating the output and capacity characteristics of the positive electrode active material. In particular, among $M_2P_2O_7$ impurity phases, $Mn_2P_2O_7$ can cause manganese dissolution during charge and discharge, leading to degradation of battery stability.

The step (a) comprises reacting an iron raw material and a phosphate-based raw material to form an Fe-P composite. Here, the iron raw material and the phosphate-based raw material may each be one or more kinds.

The iron raw material refers to a material containing an iron element. For example, the iron raw material may comprise at least one selected from the group consisting of Fe metal, FeOOH, $Fe_2O_3$, and $Fe_3O_4$.

Meanwhile, when the raw material used in step (a) further comprises a transition metal M other than Fe, at least one selected from the group consisting of $MSO_4$, $HMPO_4$, $MPO_4$, $M_3(PO_4)_2$, $(CH_3COO)_2M$, $M(NO_3)_2$, $MCO_3$, $M_2CO_3$, and $MO_2$ may be further comprised as a transition metal raw material, along with the iron raw material.

In addition, the phosphate-based raw material comprises an anion, salt, functional group, or ester derived from phosphoric acid. For example, the phosphate-based raw material may comprise at least one selected from the group consisting of $H_3PO_4$, $Li_3PO_4$, $NH_4H_2PO_4$, and $(NH_4)_2HPO_4$.

Here, the ratio of the iron raw material to the phosphate-based raw material may be such that the amount of phosphorus element is 0.90 to 2.00 moles per 1 mole of iron element, for example, 0.90 mol, 0.95 mol, 1.00 mol, 1.05 mol, 1.10 mol, 1.15 mol, 1.20 mol, 1.25 mol, 1.30 mol, 1.35 mol, 1.40 mol, 1.45 mol, 1.50 mol, 1.55 mol, 1.60 mol, 1.65 mol, 1.70 mol, 1.75 mol, 1.80 mol, 1.85 mol, 1.90 mol, 1.95 mol, 2.00 mol, or a range between any two of these values.

In step (a), iron ions and phosphate ions may react to form an Fe-P composite. For example, when iron ions ($Fe^{3+}$) and phosphate ions ($PO_4^{3-}$) react, various Fe-P composites may be formed. Such metal composites may comprise $FePO_4 \cdot nH_2O$ ($0 \leq n \leq 9$), anhydrous $FePO_4$, $Fe_3(PO_4)_2$, $Fe_2(HPO_4)_3$, and the like. Here, the Fe-P composite may be formed in a precipitated form in the slurry. Meanwhile, among the Fe-P composites, $FePO_4 \cdot 2H_2O$ may have the highest proportion.

Optionally, in step (a), at least one sub-raw material comprising an element selected from the group consisting of Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr may be additionally introduced into the slurry.

The sub-raw material may be introduced to dope the Fe-P composite with a heterogeneous element. The doped heterogeneous element may control the properties of the composite in a subsequent step or improve the performance of the positive electrode active material.

Step (b) comprises reacting a manganese raw material with the Fe-P composite to form an Fe-Mn-P composite. Here, the manganese raw material may be one or more kinds.

The manganese raw material refers to a material containing a manganese element. For example, the manganese raw material may comprise at least one selected from the group consisting of Mn metal, $MnCO_3$, $Mn_2O_3$, and $Mn_3O_4$.

Meanwhile, when the raw material used in step (b) further comprises a transition metal M other than Mn, at least one selected from the group consisting of $MSO_4$, $HMPO_4$, $MPO_4$, $M_3(PO_4)_2$, $(CH_3COO)_2M$, $M(NO_3)_2$, $MCO_3$, $M_2CO_3$, and $MO_2$ may be further comprised as a transition metal raw material, along with the manganese raw material.

Here, the ratio of the manganese raw material to the Fe-P composite may be such that the amount of manganese element is 1.00 to 2.00 moles per 1 mole of iron element, for example, 1.00 mol, 1.05 mol, 1.10 mol, 1.15 mol, 1.20 mol, 1.25 mol, 1.30 mol, 1.35 mol, 1.40 mol, 1.45 mol, 1.50 mol, 1.55 mol, 1.60 mol, 1.65 mol, 1.70 mol, 1.75 mol, 1.80 mol, 1.85 mol, 1.90 mol, 1.95 mol, 2.00 mol, or a range between any two of these values.

Meanwhile, at least one of the reactions in step (a) and step (b) may be performed at a temperature in the range of 50 to 150°C, for example, 50°C, 52.5°C, 55°C, 57.5°C, 60°C, 62.5°C, 65°C, 67.5°C, 70°C, 72.5°C, 75°C, 77.5°C, 80°C, 82.5°C, 85°C, 87.5°C, 90°C, 92.5°C, 95°C, 97.5°C, 100°C, 102.5°C, 105°C, 107.5°C, 110°C, 112.5°C, 115°C, 117.5°C, 120°C, 122.5°C, 125°C, 127.5°C, 130°C, 132.5°C, 135°C, 137.5°C, 140°C, 142.5°C, 145°C, 147.5°C, 150°C, or a range between any two of these values.

Here, the reaction may be carried out by stirring the slurry for 4 to 48 hours, for example, 4 hours, 6 hours, 8 hours, 10 hours, 12 hours, 14 hours, 16 hours, 18 hours, 20 hours, 22 hours, 24 hours, 26 hours, 28 hours, 30 hours, 32 hours, 34 hours, 36 hours, 38 hours, 40 hours, 42 hours, 44 hours, 46 hours, 48 hours, or a range between any two of these values.

In step (b), manganese ions may react with the Fe-P composite to form an Fe-Mn-P composite. In this reaction, the Fe-P composite may act as a kind of seed, and the Fe-Mn-P composite may be co-precipitated.

The Fe-Mn-P composite may be formed such that the structure of the Fe-P composite is present inside, and a Mn-P structure is present on the surface. That is, a structure having a high Fe concentration may be formed in the core, while a region having a low Fe concentration or substantially no Fe may be formed at the surface in the form of a particulate material.

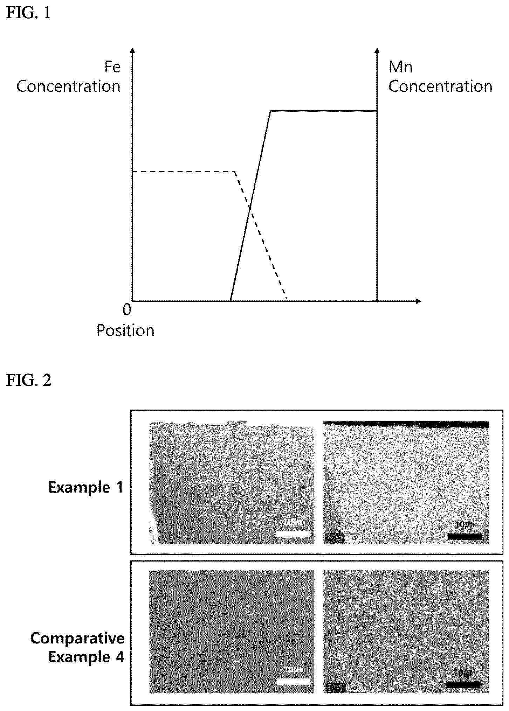

For example, referring to FIG. 1, a first region in which Fe is present but Mn is not, a second region in which a mixed structure of Fe and Mn is present, and a third region in which Mn is present but Fe is not may be located in order from the center (position 0) of the Fe-Mn-P composite toward the surface.

Here, the thickness of the first region may be 3.0 to 5.0 $\mu$m, and the thickness of the second region and the third region may be 0.5 to 2.0 $\mu$m or more, but is not limited thereto.

At least a portion of the first region and/or the second region may not contact lithium during calcination, and the content of the $Fe_2P$ phase, which has excellent electronic conductivity, may be maintained in an appropriate amount to be 0.2 to 0.9 wt% based on 100 wt% of the lithium manganese iron phosphate phase, for example, 0.2 wt%, 0.25 wt%, 0.3 wt%, 0.35 wt%, 0.4 wt%, 0.45 wt%, 0.5 wt%, 0.55 wt%, 0.6 wt%, 0.65 wt%, 0.7 wt%, 0.75 wt%, 0.8 wt%, 0.85 wt%, 0.9 wt%, or a range between any two of these values.

For example, when the Fe-P composite is exposed to a strong reducing atmosphere during calcination and an excessive amount of the $Fe_2P$ phase is formed, the resulting phase may agglomerate outside the particles, thereby reducing the capacity of the positive electrode active material. In this case, an impurity phase of $M_2P_2O_7$ may also be formed due to the instability of the M-P phase.

Meanwhile, if the Fe-Mn-P composite is formed such that the Mn-P composite structure is present in the interior and the Fe-P composite structure is present on the surface, the formation of the $Fe_2P$ phase may be significantly suppressed. However, the $M_2P_2O_7$ impurity phase may be formed, which increases resistance and may reduce capacity under high current or low temperature conditions.

Alternatively, when the Mn-P composite structure is first formed and then an iron raw material and an oxidizing agent are reacted, the Fe-P composite structure may become unstable due to the oxidizing agent, resulting in excessive formation of the $Fe_2P$ phase. At the same time, the formation of the $M_2P_2O_7$ impurity phase may also increase, which may degrade the stability and capacity of the positive electrode material.

In step (b), various Fe-Mn-P composites may be formed. The Fe-Mn-P composite may comprise $FePO_4 \cdot nH_2O$ ($0 \leq n \leq 9$), anhydrous $FePO_4$, $Fe_3(PO_4)_2$, $Fe_2(HPO_4)_3$, $H_{10}Mn_5O_{20}P_4$, $MnPO_4$, $Mn_3(PO_4)_2$, and the like. Here, the Fe-Mn-P composite may be formed in a precipitated form in the slurry.

Optionally, in step (b), at least one sub-raw material comprising an element selected from the group consisting of Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr may be additionally introduced into the slurry.

The sub-raw material may be introduced to dope the Fe-Mn-P composite with a heterogeneous element. The doped heterogeneous element may control the reaction between the Fe-P composite and Mn, or adjust the properties of the resulting positive electrode active material.

In particular, the reaction of step (b) may be carried out in the presence of an oxidizing agent. Examples of the oxidizing agent comprise, but are not limited to, at least one selected from the group consisting of hydrogen peroxide, potassium permanganate, peracetic acid, perbenzoic acid, sodium perborate, periodic acid, sodium percarbonate, potassium percarbonate, vanadium trioxide, ammonium chloride, ammonium phosphate, ferric chloride, hypochlorous acid, sodium hypochlorite, and dissolved ozone.

Here, the oxidizing agent may be introduced after completion of step (a). Referring to Reaction Scheme 1 below, it may be difficult to form the Fe-P composite in step (a) in the presence of an oxidizing agent.

[Reaction Scheme 1]

$$1) \qquad 2FeOOH + 2H_2O_2 \rightarrow 2Fe(OH)_3 + O_2$$

$$2) \qquad Fe(OH)_3 \rightarrow FeOOH \text{ (dehydration at 200°C)}$$

Meanwhile, step (c) may be a step of adding a lithium raw material and a carbon raw material to the slurry comprising the Fe-Mn-P composite, without a separate dehydration or drying process.

In addition, when only the dehydration or drying process is omitted in a conventional method for preparing a lithium manganese iron phosphate-based compound using a precursor, sulfur (S)- or nitrogen (N)-based compounds may remain in the slurry as impurities. Such impurities not only generate harmful substances such as $SO_x$ and $NO_x$ during calcination, but also interfere with the carbonization of the carbon raw material and the growth of the olivine crystal. Furthermore, if such impurity-derived components remain in the positive electrode active material, gas may be generated in the battery, thereby degrading its stability.

The lithium raw material may be used to introduce lithium such that the Fe-Mn-P composite can function as a lithium positive electrode active material.

In step (c), the lithium raw material may be added such that the atomic ratio (Li/Metal) of lithium atoms (Li) to the total number of metal atoms other than lithium (Metal) in the slurry is 0.50 to 1.50, for example, the ratio may be 0.50, 0.55, 0.60, 0.65, 0.70, 0.75, 0.80, 0.85, 0.90, 0.95, 1.00, 1.05, 1.10, 1.15, 1.20, 1.25, 1.30, 1.35, 1.40, 1.45, 1.50, or a range between any two of these values, but is not limited thereto.

Meanwhile, the carbon raw material added in step (c) may be for forming a carbon coating to improve the conductivity of the positive electrode active material. Minimizing the thickness of the carbon coating layer while improving its uniformity can reduce flowability degradation caused by amorphous carbon and enhance the conductivity of the positive electrode active material.

For example, an olivine-based positive electrode material such as a lithium manganese iron phosphate-based compound has relatively low electrical conductivity due to the strong covalent bonding of $PO_4^{3-}$. In addition, due to its crystal structure, $Li^+$ diffuses in one dimension, which is known to result in low ionic conductivity.

To address these drawbacks, technologies have been proposed to improve conductivity by forming a carbon coating, and to enhance $Li^+$ diffusion through particle nanonization.

However, in conventional positive electrode active materials, the coated carbon tends to exist in an amorphous phase, which may reduce the density of the active material.

In addition, conventionally nanonized particulate materials tend to grow into angular-shaped particles due to aggregation during the calcination process.

As a result, the reduction in flowability caused by amorphous carbon and the angular shape of the particles may decrease the density of the positive electrode active material, thereby lowering the energy density of the final product.

In contrast, the carbon coating layer formed by the method described above may have a uniform and thin thickness. Moreover, the carbon raw material may induce the lithium composite compound to grow in a spherical shape.

Meanwhile, the carbon raw material may be a compound in which the content of carbon (C) element in the molecular structure is 30 to 60 wt% for example, the carbon content may be 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt%, 59 wt%, 60 wt%, or a range between any two of these values.

When a carbon raw material satisfying the above carbon content range is used, a product having excellent yield and uniformity of the carbon coating can be prepared, even when the same amount of compound is used.

Examples of the carbon raw material include, but are not limited to, sucrose, glucose, polyvinyl alcohol (PVA), polyvinylpyrrolidone (PVP), colloidal carbon, citric acid, tartaric acid, glycolic acid, polyacrylic acid, adipic acid, glycine, and aminobenzoic acid.

Further, the characteristics of the formed carbon coating layer may be controlled by adjusting the characteristics of the carbon raw material.

For example, minimizing the thickness of the carbon coating layer while improving its uniformity can reduce the deterioration in flowability due to amorphous carbon and enhance the conductivity of the positive electrode active material.

In an example, the thickness of the carbon coating layer formed in step (c) may vary depending on the type of carbon raw material and may be in the range of 1 to 500 nm, for example, the thickness may be 1 nm, 2.5 nm, 5 nm, 10 nm, 15 nm, 20 nm, 25 nm, 50 nm, 75 nm, 100 nm, 125 nm, 150 nm, 175 nm, 200 nm, 225 nm, 250 nm, 300 nm, 350 nm, 400 nm, 450 nm, 500 nm, or a range between any two of these values, but is not limited thereto.

Preferably, the carbon raw material in step (c) may be added such that the atomic ratio (C/Metal) of carbon atoms (C) to the total number of metal atoms other than lithium (Metal) in the slurry is 0.25 to 0.75, for example, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67, 0.68, 0.69, 0.70, 0.71, 0.72, 0.73, 0.74, 0.75, or a range between any two of these values.

Optionally, in step (c), at least one sub-raw material comprising an element selected from the group consisting of Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr may be additionally introduced into the slurry.

The sub-raw material may be introduced to dope the lithium composite compound with a heterogeneous element. The doped heterogeneous element may improve the stability or the conductivity of the positive electrode active material.

During the preparation of the Fe-Mn-P composite, some solid particles may aggregate with each other. If at least a portion of such aggregates is over-agglomerated, it may be difficult to sufficiently react with the lithium raw material or the carbon raw material.

Therefore, if necessary, prior to or after step (c), the solid content in the slurry may be ground to break the over-agglomerated particles.

Meanwhile, the grinding may be performed under conditions in which the Fe-Mn-P composite including the above-described first region, second region, and third region is not damaged, but the over-agglomerated particles can be broken.

In the present disclosure, the terms "unground lithium composite compound" or "unground state" may not only refer to a lithium composite compound that has not undergone a grinding process, but may also include a state in which only the over-agglomerated particles have been broken under conditions that do not damage the Fe-Mn-P composite comprising the first region, the second region, and the third region.

In addition, the slurry may have a solid content of 20 to 50 wt%, for example, 20%, 22.5%, 25%, 27.5%, 30%, 32.5%, 35%, 37.5%, 40%, 42.5%, 45%, 47.5%, 50%, or a range between any two of these values, but is not limited thereto.

Meanwhile, the average particle diameter (D50) of the ground particles may be 1.0 μm or less, for example, 1.0 μm, 0.95 μm, 0.90 μm, 0.85 μm, 0.80 μm, 0.75 μm, 0.70 μm, 0.65 μm, 0.60 μm, 0.55 μm, 0.50 μm, 0.45 μm, 0.40 μm, 0.35 μm, 0.30 μm, 0.25 μm, 0.20 μm, 0.15 μm, 0.10 μm, 0.05 μm, or a range between any two of these values, but is not limited thereto.

To grind the particles, a dry or wet dispersion mill may be used, such as a ball mill, a bead mill (using beads typically used for grinding metallic raw materials, such as Al beads, Fe beads, or Zr beads), a vibratory mill, an attritor mill, an air jet mill, a disk mill, or an air classifier mill.

In an example, the grinding step may be carried out using a milling device comprising beads having a size in the range of 0.1 to 1.5 mm, for example, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1.0 mm, 1.05 mm, 1.1 mm, 1.15 mm, 1.2 mm, 1.25 mm, 1.3 mm, 1.35 mm, 1.4 mm, 1.45 mm, 1.5 mm, or a range between any two of these values. Here, the size refers to the diameter of the bead. If the bead is not spherical, the diameter may refer to the length of the major axis.

The milling device may comprise beads in an amount of 30 to 50% by volume, for example, 30%, 32.5%, 35%, 37.5%, 40%, 42.5%, 45%, 47.5%, 50%, or a range between any two of these values, but is not limited thereto.

Meanwhile, in step (c), the slurry may be dried to obtain a powder. For example, the slurry may be dried by spray drying. That is, the powder of step (d) may be a product obtained by spray drying the slurry of step (c).

Spray drying, which is an example of drying, may be performed in a spray dryer. The spray dryer is not particularly limited as long as it is a spray drying device capable of drying the slurry containing particles into dried particles having a substantially spherical shape. For instance, an ultrasonic sprayer, single-fluid nozzle sprayer, two-fluid nozzle sprayer, ultrasonic nozzle sprayer, filter expansion aerosol generator (FEAG), or a disk-type aerosol generator may be used.

The spray dryer may comprise a spray nozzle and a drying chamber. The slurry may be atomized into droplets of a predetermined size through the spray nozzle and sprayed into the drying chamber where a relatively high-temperature gas flow is present.

The raw materials within the droplets sprayed into the drying chamber may be dried into particles having a substantially spherical shape under the temperature conditions in the chamber.

Meanwhile, when a specific carbon raw material is included in the slurry, it may suppress unnecessary agglomeration of the particles during spray drying. As a result, particles with a shape close to spherical may be obtained.

In an example, moisture loss during drying may reduce the particle packing density and form pores. As a result, the particle strength may decrease, and the stability of the positive electrode active material may be insufficient.

Here, by adjusting the viscosity of the slurry prior to drying, it is possible to shorten the condensation time during drying and minimize the reduction in packing density due to moisture loss during drying. Meanwhile, if the viscosity of the slurry is excessively high, its flowability during drying may decrease, thereby reducing process efficiency and making it difficult to obtain spherical particles. An example of a method for adjusting the viscosity of the slurry is the addition of a binder.

Subsequently, step (d) may be a step of heat-treating the powder dried in step (c) to form a lithium composite compound.

During the heat treatment of step (d), the carbon raw material may be carbonized to form a carbon coating layer. Accordingly, the carbon raw material needs to be carbonizable within the heat treatment temperature of step (d). If a non-carbonized carbon-based compound remains in the positive electrode active material, improvement in conductivity may be insufficient, or unexpected side effects may occur.

The heat treatment of step (d) may be carried out at a peak temperature of 500 to 950°C for 5 to 15 hours under an inert atmosphere. The peak temperature may vary depending on the composition of the target positive electrode active material.

For example, the heat treatment may be performed at a peak temperature of 500°C, 525°C, 550°C, 575°C, 600°C, 625°C, 650°C, 675°C, 700°C, 725°C, 750°C, 775°C, 800°C, 825°C, 850°C, 875°C, 900°C, 925°C, 950°C, or a range between any two of these values. The heat treatment may be performed by maintaining the peak temperature for a time period of, for example, 5 hours, 5.5 hours, 6 hours, 6.5 hours, 7 hours, 7.5 hours, 8 hours, 8.5 hours, 9 hours, 9.5 hours, 10 hours, 10.5 hours, 11 hours, 11.5 hours, 12 hours, 12.5 hours, 13 hours, 13.5 hours, 14 hours, 14.5 hours, 15 hours, or a range between any two of these values, but is not limited thereto.

When heat treatment is performed within the above temperature range, the lithium composite compound may exhibit excellent density.

On the other hand, when the heat treatment temperature in step (d) is insufficient, sintering of the precursor may proceed incompletely, resulting in insufficient crystal growth of the lithium composite compound or difficulty in forming the carbon coating layer. Consequently, the density of the lithium composite compound may be reduced.

Meanwhile, if the heat treatment temperature in step (d) is excessively high, thermal decomposition of the lithium composite compound may occur, which may lead to a reduction in particle strength or particle collapse.

The heat treatment may be performed by increasing the temperature to the peak temperature at a rate of 1 to 10°C per minute, for example, 1°C, 1.5°C, 2°C, 2.5°C, 3°C, 3.5°C, 4°C, 4.5°C, 5°C, 5.5°C, 6°C, 6.5°C, 7°C, 7.5°C, 8°C, 8.5°C, 9°C, 9.5°C, 10°C, or a range between any two of these values.

Here, the inert atmosphere may be formed by replacing air with at least one inert gas selected from the group consisting of $N_2$, Ar, He, Rn, Ne, and Xe, but is not limited thereto.

Among the Fe-Mn-P composites formed in step (b), the majority may be in the form of hydrates. During calcination in step (d), the crystal water of the hydrate-type Fe-Mn-P composite may be removed, and the crystal structure may be restructured. In this restructuring process, moisture may be released and thermal energy consumed. As a result, the carbon raw material may be carbonized at a relatively high temperature, and a more uniform carbon coating may be formed, thereby improving conductivity.

Meanwhile, after the heat treatment in step (d), cooling may be performed under an inert atmosphere at a temperature of 150°C or lower. For example, the heat-treated lithium composite compound may be obtained by furnace cooling.

In an example, the lithium composite compound obtained in step (d) may comprise a first region in which Fe is present but Mn is not, a second region in which a mixed structure of Fe and Mn is present, and a third region in which Mn is present but Fe is not, from the center to the surface. In the unground state of the lithium composite compound, the $Fe_2P$ phase may be present in at least a portion of the first region and/or the second region.

Here, the thickness of the first region may be 3.0 to 5.0 μm, for example, 3 μm, 3.25 μm, 3.5 μm, 3.75 μm, 4 μm, 4.25 μm, 4.5 μm, 4.75 μm, 5 μm, or a range between any two of these values. The thickness of the second region and the third region may be 0.5 to 2.0 μm or more, for example, 0.5 μm, 0.75 μm, 1.0 μm, 1.25 μm, 1.5 μm, 1.75 μm, 2.0 μm, a range between any two of these values, or 2.0 μm or more, but is not limited thereto.

When the Fe-Mn-P composite comprising the above-described first region, second region, and third region is heat-treated together with the lithium raw material, it is possible to manufacture a lithium composite compound while minimizing the excessive formation or complete suppression of the $Fe_2P$ phase. In addition, the heat-treated lithium composite compound may retain the presence of the first region, second region, and third region.

Additionally, before or after performing step (d), a disintegration, classification, and/or washing process may be performed on the lithium composite compound.

In an example, after step (d), the method may further comprise (e) a step of grinding the lithium composite compound such that the average particle diameter is 1.0 $\mu$m or less. By grinding the lithium composite compound obtained according to the above-described method, in which the $Fe_2P$ phase is appropriately distributed, a particulate material having a controlled particle size may be obtained.

In step (e), the particulate material may be ground such that the average particle diameter is 1.0 $\mu$m or less, for example, 1.0 $\mu$m, 0.9 $\mu$m, 0.8 $\mu$m, 0.7 $\mu$m, 0.6 $\mu$m, 0.5 $\mu$m, 0.4 $\mu$m, 0.3 $\mu$m, 0.2 $\mu$m, 0.1 $\mu$m, or a range between any two of these values.

In an example, the average particle diameter (D50) of the ground particulate material may be 0.5 to 0.7 $\mu$m, for example, 0.5 $\mu$m, 0.51 $\mu$m, 0.52 $\mu$m, 0.53 $\mu$m, 0.54 $\mu$m, 0.55 $\mu$m, 0.56 $\mu$m, 0.57 $\mu$m, 0.58 $\mu$m, 0.59 $\mu$m, 0.6 $\mu$m, 0.61 $\mu$m, 0.62 $\mu$m, 0.63 $\mu$m, 0.64 $\mu$m, 0.65 $\mu$m, 0.66 $\mu$m, 0.67 $\mu$m, 0.68 $\mu$m, 0.69 $\mu$m, 0.7 $\mu$m, or a range between any two of these values.

The particulate material ground to have an average particle diameter within the above range may be appropriately aggregated due to surface energy. As a result, the density characteristics of the positive electrode active material may be improved.

To grind the particles, a dry or wet dispersion mill may be used, such as a ball mill, a bead mill (using beads commonly used for grinding metallic raw materials, such as Al beads, Fe beads, or Zr beads), a vibratory mill, an attritor mill, an air jet mill, a disk mill, or an air classifier mill.

Positive electrode active material for lithium secondary battery

According to another aspect of the present disclosure, a positive electrode active material for a lithium secondary battery may comprise a lithium composite compound capable of lithium intercalation and deintercalation, wherein the lithium composite compound comprises Fe and Mn, and comprises a plurality of particulate materials, and the $Fe_2P$ phase may be present in at least a partial region of the particulate material.

The positive electrode active material may comprise particulate materials composed of a lithium composite compound capable of intercalation/deintercalation of lithium. The particulate material may be a compound containing Fe and Mn as constituent elements, and may comprise a lithium manganese iron phosphate phase.

Preferably, the particulate materials may exist without forming separate aggregates. In this case, the particulate materials may have a spherical shape. In addition, since the lithium composite compound consists of particulate materials having a smooth surface, the positive electrode active material may have excellent compaction density.

Here, the average particle diameter of the particulate materials (which may refer to the average major axis length of the particulate materials) may be from 0.01 to 5 $\mu$m, for example, 0.01 $\mu$m, 0.1 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, 0.9 $\mu$m, 1.0 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2.0 $\mu$m, 2.1 $\mu$m, 2.2 $\mu$m, 2.3 $\mu$m, 2.4 $\mu$m, 2.5 $\mu$m, 2.6 $\mu$m, 2.7 $\mu$m, 2.8 $\mu$m, 2.9 $\mu$m, 3.0 $\mu$m, 3.1 $\mu$m, 3.2 $\mu$m, 3.3 $\mu$m, 3.4 $\mu$m, 3.5 $\mu$m, 3.6 $\mu$m, 3.7 $\mu$m, 3.8 $\mu$m, 3.9 $\mu$m, 4.0 $\mu$m, 4.1 $\mu$m, 4.2 $\mu$m, 4.3 $\mu$m, 4.4 $\mu$m, 4.5 $\mu$m, 4.6 $\mu$m, 4.7 $\mu$m, 4.8 $\mu$m, 4.9 $\mu$m, 5.0 $\mu$m, or a range between any two of these values, thereby enabling the achievement of an optimal electrode density when such a positive electrode active material is used.

In an example, the particulate material may be present as a primary particle, and a plurality of the primary particles may be aggregated to form a secondary particle. Here, the primary particle refers to a single grain or crystallite, and the secondary particle refers to an aggregate formed by the agglomeration of a plurality of primary particles. In this case, the primary particle may have a spherical shape. Since the lithium composite compound consists of particles with a smooth surface, the positive electrode active material may exhibit excellent compaction density.

The particulate material may comprise the $Fe_2P$ phase in at least a portion of its region. The $Fe_2P$ phase has excellent electrical conductivity and may improve the performance of the positive electrode active material. In particular, when the $Fe_2P$ phase is uniformly located within the particulate material, the above effect may be further enhanced.

Preferably, 50 wt% or more of the total $Fe_2P$ phase included in the positive electrode active material, for example, 50 wt%, 55 wt%, 60 wt%, 65 wt%, 70 wt%, 75 wt%, 80 wt%, 85 wt%, 90 wt%, 95 wt%, 99 wt%, 100 wt%, or a range between any two of these values, may be located inside the particulate material. Here, when the particulate material is a secondary particle formed by the aggregation of a plurality of primary particles, the inside of the particulate material refers to the interior of the primary particles.

Although the $Fe_2P$ phase may be formed under excessively reducing conditions or undercalcination conditions during synthesis of the positive electrode active material, such a $Fe_2P$ phase may be unevenly distributed or located on the surface of the particle, and may excessively promote or inhibit the crystal growth of the lithium composite compound during formation.

Meanwhile, the particulate material may have the $Fe_2P$ phase uniformly distributed inside the primary particles, thereby achieving high conductivity and improving the capacity and rate characteristics of the positive electrode active material.

The $Fe_2P$ phase may be identified using XRD Rietveld refinement. For example, the lithium manganese iron phosphate phase may be identified based on a card such as JCPDS No. 74-0375 with an orthorhombic Pnma space group, and the $Fe_2P$ phase may be identified based on a card such as JCPDS No. 01-1200, but is not limited thereto. Meanwhile, the lithium manganese iron phosphate phase may include all compound phases simultaneously containing Li, Fe, Mn, P, and O.

Here, the content of the $Fe_2P$ phase may be 0.2 to 0.9 wt% based on 100 wt% of the lithium manganese iron phosphate phase included in the lithium composite compound, for example, 0.2 wt%, 0.25 wt%, 0.3 wt%, 0.35 wt%, 0.4 wt%, 0.45 wt%, 0.5 wt%, 0.55 wt%, 0.6 wt%, 0.65 wt%, 0.7 wt%, 0.75 wt%, 0.8 wt%, 0.85 wt%, 0.9 wt%, or a range between any two of these values. When the $Fe_2P$ content falls within the above range, the positive electrode active material may exhibit both excellent conductivity and sufficient capacity.

In an example, the particulate material may be an unground lithium composite compound comprising a first region in which Fe is present but Mn is not, a second region comprising a mixed structure of Fe and Mn, and a third region in which Mn is present but Fe is not, from the core to the surface, or may be obtained by grinding the unground lithium composite compound. The particulate material may be obtained by grinding the unground lithium composite compound in which the $Fe_2P$ phase is present in at least a portion of the first region and/or the second region. Alternatively, the particulate material may be a lithium composite compound comprising the first region, second region, and third region without undergoing a separate grinding process, but is not limited thereto.

Here, the thickness of the first region may be 3.0 to 5.0 $\mu$m, for example, the thickness may be 3 $\mu$m, 3.25 $\mu$m, 3.5 $\mu$m, 3.75 $\mu$m, 4 $\mu$m, 4.25 $\mu$m, 4.5 $\mu$m, 4.75 $\mu$m, 5 $\mu$m, or a range between any two of these values, but is not limited thereto.

Meanwhile, the thickness of the second and third regions may be 0.5 to 2.0 $\mu$m or more, for example, 0.5 $\mu$m, 0.75 $\mu$m, 1.0 $\mu$m, 1.25 $\mu$m, 1.5 $\mu$m, 1.75 $\mu$m, 2.0 $\mu$m, a range between any two of these values, or 2.0 $\mu$m or more, but is not limited thereto.

In an example, when the thicknesses of the first, second, and third regions fall within the above ranges, the particulate material obtained through grinding may provide the effects of improved conductivity and capacity due to a suitably dispersed and uniform $Fe_2P$ phase, while minimizing performance degradation caused by impurity phases.

In a non-limiting example, the total content of $Fe_2P_2O_7$ and $Mn_2P_2O_7$ phases in the particulate material may be 2.5 wt% or less, based on 100 wt% of the lithium manganese iron phosphate phase included in the lithium composite compound, for example, 2.5 wt%, 2.25 wt%, 2.0 wt%, 1.75 wt%, 1.5 wt%, 1.25 wt%, 1.0 wt%, 0.75 wt%, 0.5 wt%, 0.25 wt%, 0.15 wt%, 0.05 wt%, an undetectable trace amount (n.d.), or a range between any two of these values. The $Fe_2P_2O_7$ and $Mn_2P_2O_7$ phases may be identified using XRD Rietveld refinement.

Meanwhile, the content of the $Mn_2P_2O_7$ phase in the particulate material may be 2.5 wt% or less, based on 100 wt% of the lithium manganese iron phosphate phase included in the lithium composite compound, for example, 2.5 wt%, 2.25 wt%, 2.0 wt%, 1.75 wt%, 1.5 wt%, 1.25 wt%, 1.0 wt%, 0.75 wt%, 0.5 wt%, 0.25 wt%, 0.15 wt%, 0.05 wt%, an undetectable trace amount (n.d.), or a range between any two of these values. The $Mn_2P_2O_7$ phase may also be identified using XRD Rietveld refinement.

The $Fe_2P_2O_7$ and $Mn_2P_2O_7$ phases may act as resistive phases, thereby degrading the output and capacity characteristics of the positive electrode active material. Among them, $Mn_2P_2O_7$ may cause manganese dissolution during charging and discharging, resulting in decreased battery stability.

In an example, the particulate material may satisfy at least one of the following conditions represented by Equations 1 to 3, but is not limited thereto.

[Equation 1]

$$28.10\ \text{Å}^2 \leq A_p \leq 28.74\ \text{Å}^2$$

[Equation 2]

$$62.40\ \text{Å}^2 \leq B_p \leq 63.10\ \text{Å}^2$$

[Equation 3]

$$48.50 \ \text{Å}^2 \leq C_p \leq 49.20 \ \text{Å}^2$$

where $A_p$ to $C_p$ in Equations 1 to 3 may be calculated according to the following Equations 1' to 3':

[Equation 1']

$$A_p = V_c/l_a$$

[Equation 2']

$$B_p = V_c/l_b$$

[Equation 3']

$$C_p = V_c/l_c$$

In the above equation, the $V_c$ is the unit cell volume of the particulate material, and $l_a$, $l_b$, and $l_c$ respectively represent the diameters of the particulate material along the a-axis, b-axis, and c-axis.

Equations 1 to 3 are cell characteristic values representing the atomic arrangement of Fe and Mn in the particulate material, where Fe-Mn may be homogeneous, or may exhibit different cell characteristic values in a Mn-rich phase or Fe-rich phase. If the characteristic values from A' to C' satisfy the aforementioned ranges, the rate characteristics, lifespan characteristics, and low-temperature characteristics of the positive electrode active material may be further improved. However, these values are merely exemplary and may vary depending on the properties of the positive electrode active material.

In addition, the lithium composite compound may be represented by the following Chemical Formula 1.

[Chemical Formula 1]        $Li_pFe_{1-x-y}Mn_xA_yA'_zP_{1-z}O_w$

where A is at least one element selected from the group consisting of Ag, Al, As, Au, Ba, Be, Bi, Ca, Cd, Ce, Co, Cr, Cu, Ga, Hf, In, K, La, Mg, Mo, Na, Nb, Nd, Ni, Os, Pd, Pr, Pt, Rh, Ru, Sm, Sn, Sr, Ta, Ti, V, W, Y, Zn, and Zr, A' is at least one element selected from the group consisting of C, Si, S, N, B, F, Cl, and I, and $0.5 \leq p \leq 1.5$, $0 < x < 1$, $0 \leq y < 1$, $0 \leq z < 1$, $0 < w \leq 4$.

Chemical Formula 1 represents a lithium composite compound capable of intercalating/deintercalating lithium and may comprise lithium, a metal, and phosphate.

For example, p may be 0.5, 0.55, 0.6, 0.65, 0.7, 0.75, 0.8, 0.85, 0.9, 0.95, 1, 1.05, 1.1, 1.15, 1.2, 1.25, 1.3, 1.35, 1.4, 1.45, 1.5, or a range between any two of these values, but is not limited thereto.

In addition, x, y, and z may each be 0, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 0.99, or a range between any two of these values, but are not limited thereto.

Further, w may be 0.01, 0.05, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.25, 2.5, 2.75, 3, 3.25, 3.5, 3.75, 4, or a range between any two of these values, but is not limited thereto.

That is, compounds such as $LiFe_{0.8}Mn_{0.2}PO_4$ or $LiFe_{0.5}Mn_{0.5}PO_4$ may be represented by Chemical Formula 1. Meanwhile, the lithium composite compound may further comprise a dopant, which may be represented by A and/or A'.

Chemical Formula 1 may represent the average composition of the lithium composite compound.

Meanwhile, the positive electrode active material may comprise a coating layer that covers at least a portion of the surface of the particulate material, the interface between particulate materials, and/or the surface of the aggregates formed by aggregation of the particulate materials.

Here, the coating layer may include a carbon layer and/or an oxide layer to improve the stability or conductivity of the particulate materials.

For example, the coating layer may be present to cover at least a portion of the exposed surface of the particulate materials. In cases where the particulate materials are aggregated to form secondary particles, the coating layer may be present on the exposed surface of the primary particles forming the outermost portion of the secondary particles.

Accordingly, the coating layer may be present as a layer that continuously or discontinuously coats the surface of the particulate materials and/or the secondary particles formed by aggregation thereof. If the coating layer is discontinuous, it may be present in the form of islands.

In addition, when the particulate material forms an aggregate, the coating layer may be present not only at the interface between the particulate materials and on the surface of the secondary particles, but also within internal voids formed in the secondary particles.

Such a coating layer can contribute to improving the electrochemical properties and stability of the positive electrode active material.

Herein, the coating layer may exist as a solid solution without forming an interface with the particulate materials and/or secondary particles formed by agglomeration thereof, but is not necessarily limited thereto.

Meanwhile, the thickness of the amorphous carbon coating layer formed on at least a portion of the surface of at least some of the particulate materials may be from 1 to 500 nm, for example, 1 nm, 2.5 nm, 5 nm, 10 nm, 15 nm, 20 nm, 25 nm, 50 nm, 75 nm, 100 nm, 125 nm, 150 nm, 175 nm, 200 nm, 225 nm, 250 nm, 300 nm, 350 nm, 400 nm, 450 nm, 500 nm, or a range between any two of these values.

Here, the thickness of the carbon coating layer may be adjusted according to the balance between flowability and conductivity of the lithium composite compound.

In particular, the carbon coating layer may have a small thickness variation, thereby allowing the positive electrode active material to exhibit an excellent balance between flowability and conductivity, which are in a complementary relationship.

Various known methods may be used to measure the thickness of the carbon coating layer. For example, the thickness may be measured from a TEM or SEM image, or determined from the result of a linear scanning analysis for carbon in a specific direction based on EDX analysis. The measured thickness may be an average value obtained from at least three measurements.

Furthermore, the carbon coating layer may be uniformly formed on the surface of the particulate material, which is the lithium composite compound, so as to have a smooth surface texture. As a result, the positive electrode active material may have an increased compaction density.

Olivine-based positive electrode materials are known to have low electrical conductivity due to the strong covalent bonding of $PO_4^{3-}$. In addition, they have low ionic conductivity due to the one-dimensional diffusion characteristics of $Li^+$ in the crystal structure. To address these issues, it has been proposed to form a carbon coating layer and prepare a nanostructured positive electrode active material.

However, an amorphous carbon coating layer may cause a reduction in the density of the positive electrode active material. Nanostructured particles tend to aggregate and grow into angular shapes during calcination, thereby reducing flowability and similarly decreasing the density of the positive electrode active material. This leads to a problem in which the energy density per unit volume is reduced.

In contrast, the particulate material including the lithium composite compound according to the present disclosure comprises a uniform carbon coating layer. Moreover, under conditions that form such a carbon coating layer, the lithium composite compound may grow into spherical particulate material, thereby minimizing the reduction in density.

Meanwhile, even when the coating layer of the compound is present on at least a portion of the surface of the particulate material, it is preferable that the particulate material retains a spherical shape.

Lithium secondary battery

According to still another aspect of the present disclosure, there is provided a positive electrode including a positive electrode current collector and a positive electrode active material layer formed on the positive electrode current collector. The positive electrode active material layer may include the positive electrode active material prepared by the method according to various embodiments described above.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 $\mu$m, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present disclosure is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present disclosure provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode.

The lithium secondary battery may be provided as an anode-free secondary battery. Since the positive electrode is the same as described above, detailed description will be omitted for convenience, and only the remaining components not described will be described in detail below. In addition, the explanation related to the negative electrode, which will be described later, should be understood as being explained on the premise that a negative electrode is present in a lithium secondary battery.

The lithium secondary battery may be one in which the separator is replaced with a solid electrolyte. In this case, when manufacturing the positive electrode and the negative electrode, an electrode slurry composition in which a solid electrolyte is further added may be used.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke, or copper or stainless steel whose surface is treated with carbon, nickel, titanium or silver, or an aluminum-cadmium alloy. In addition, the negative electrode current collector may generally have a thickness of 3 to 500 $\mu$m, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as $SiO_\beta$ ($0<\beta<2$), $SnO_2$, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multilayered structure.

In addition, the electrolyte used in the present disclosure may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present disclosure is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/-discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

The electrolyte may include a solid electrolyte such as a solid polymer electrolyte, a gel-type polymer electrolyte, or a solid inorganic electrolyte.

Regarding a lithium secondary battery including a solid electrolyte, the above-described separator may be omitted. However, since it is difficult for the electrolyte to penetrate into the positive electrode and the negative electrode, the positive electrode and the negative electrode may be formed by mixing a solid electrolyte.

The solid polymer electrolyte or the gel-type polymer electrolyte may be a salt of metal ions of Group 1 or Group 2 in the periodic table used in secondary batteries complexed with a polymer resin. For example, a polymer resin may be added to a solvated lithium salt.

The salt of metal ions may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$.

The polymer resin may be, for example, a polyether-based polymer, a polycarbonate-based polymer, an acrylate-based polymer, a polysiloxane-based polymer, a phosphazene-based polymer, a polyethylene derivative, an alkylene oxide derivative such as polyethylene oxide, a phosphate ester polymer, polyagitation lysine, polyester sulfide, polyvinyl alcohol, polyvinylidene fluoride, a polymer containing an ionic dissociation group, a branched copolymer in which an amorphous polymer such as polymethyl methacrylate (PMMA), polycarbonate, polysiloxane (PDMS), or phosphazene is copolymerized on a polyethylene oxide (PEO) main chain as a comonomer, a comb-like polymer resin and a cross-linked polymer resin.

Generally, as the solid inorganic electrolyte, a sulfide-based solid electrolyte and an oxide-based solid electrolyte may be used.

The sulfide-based solid electrolyte may be a material that includes sulfur (S) and has the conductivity of metal ions of Group 1 or Group 2 in the periodic table used in secondary batteries. For example, it may be Li-P-S-based glass or an Li-P-S-based glass ceramic, which has lithium ion conductivity.

An example of the sulfide-based solid electrolyte may be at least one selected from the group consisting of $Li_6PS_5Cl$, $Li_6PS_5Br$, $Li_6PS_5I$, $Li_2S-P_2S_5$, $Li_2S-LiI-P_2S_5$, $Li_2S-LiI-Li_2O-P_2S_5$, $Li_2S-LiBr-P_2S_5$, $Li_2S-Li_2OP_2S_5$, $Li_2S-Li_3PO_4-P_2S_5$, $Li_2S-P_2S_5-P_2S_5$, $Li_2S-P_2S_5-SiS_2$, $Li_2S-P_2S_5-SnS$, $Li_2S-P_2S_5-Al_2S_3$, $Li_2S-GeS_2$, and $Li_2S-GeS_2-ZnS$.

The oxide-based solid electrolyte may be a material that includes oxygen (O) and has the conductivity of metal ions of Group 1 or Group 2 in the periodic table used in secondary batteries. For example, it may be at least one selected from the group consisting of LLTO-based compounds, $Li_6La_2CaTa_2O_{12}$, $Li_6La_2ACaNb_2O_{12}$, $Li_6La_2ASrNb_2O_{12}$, $Li_2Nd_3TeSbO_{12}$, $Li_3BO_{2.5}N_{0.5}$, $Li_9SiAlO_8$, LAGP-based compounds, LATP-based compounds, LISICON-based compounds, LIPON-based compounds, perovskite-based compounds, NASICON-based compounds, and LLZO-based compounds.

Since the lithium secondary battery including the positive electrode active material according to the present disclosure stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present disclosure is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present disclosure, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present disclosure will be described in further detail with reference to examples. However, these examples are merely provided to exemplify the present disclosure, and thus the scope of the present disclosure will not be construed not to be limited by these examples.

Preparation Example 1. Preparation of positive electrode active material

(1) Example 1

FeOOH and 85 wt% concentrated $H_3PO_4$ were mixed in a reactor such that the molar ratio of Fe to P was 1:2.55. Then, distilled water was added such that the total weight of FeOOH and $H_3PO_4$ in the slurry was 40 wt%. The mixture was stirred at 60°C for 8 hours to obtain a slurry containing an Fe-P composite. An example of the reaction for forming the Fe-P composite is shown in Reaction Scheme 2 below:

$$[\text{Reaction Scheme 2}] \qquad x\text{FeOOH} + y\text{H}_3\text{PO}_4 \rightarrow \text{Fe}_x(\text{PO}_4)_y \cdot n\text{H}_2\text{O}$$

$Mn_3O_4$ and $H_2O_2$ were then added to the slurry such that the molar ratio of Fe, Mn, and $H_2O_2$ was 4:6:5. The mixture was further stirred at 60°C for 8 hours to obtain a slurry containing an Fe-Mn-P composite. An example of the reaction for forming the Fe-Mn-P composite is shown in Reaction Scheme 3 below:

$$[\text{Reaction Scheme 3}] \qquad x\text{Mn}_3\text{O}_4 + y\text{H}_3\text{PO}_4 + \text{H}_2\text{O}_2 \rightarrow \text{Mn}_{3x}(\text{PO}_4)_z(\text{HPO}_4)_{y-z} \cdot n\text{H}_2\text{O}$$

Lithium source material $Li_2CO_3$ and carbon source material glucose were then added to the slurry such that the molar ratio of Fe, Li, and C was 1:2.55:1, and a precipitate was obtained. Subsequently, the slurry was dried using a spray dryer (DJE003R from Dongjin Technology Institute).

The dried mixture was then heat-treated in a furnace under a nitrogen atmosphere, increasing the temperature at a rate of 2°C/min and maintaining it at 650°C for 10 hours. After the heat treatment, the mixture was pulverized using a jet mill so that D50 was 1.0 $\mu$m or less. The material was then furnace-cooled and classified to obtain a positive electrode active material including lithium iron manganese phosphate.

(2) Example 2

FeOOH and 85 wt% concentrated $H_3PO_4$ were mixed in a reactor such that the molar ratio of Fe to P was 1:2.55. Subsequently, distilled water was added to the slurry so that the total weight of FeOOH and $H_3PO_4$ became 40 wt%. The mixture was then stirred at 60°C for 8 hours to obtain a slurry comprising an Fe-P composite.

$Mn_3O_4$ and $H_2O_2$ were added to the slurry such that the molar ratio of Fe, Mn, and $H_2O_2$ was 4:6:5. The mixture was further stirred at 60°C for 8 hours to obtain a slurry comprising an Fe-Mn-P composite.

Lithium raw material $Li_2CO_3$ and carbon raw material glucose were added to the slurry such that the molar ratio of Fe, Li, and C was 1:2.55:1, and a dopant, $TiO_2$, was further added such that the amount of Ti was 0.4 mol% based on the total moles of the positive electrode active material, thereby obtaining a precipitate. Subsequently, the slurry was dried using a spray dryer.

The dried mixture was subjected to heat treatment in a furnace under a nitrogen atmosphere by increasing the temperature at a rate of 2°C/min and maintaining the temperature at 650°C for 10 hours. After the heat treatment, the mixture was pulverized using a jet mill so that D50 was 1.0 $\mu$m or less. The resulting material was then furnace-cooled and classified to obtain a positive electrode active material comprising lithium iron manganese phosphate.

(3) Example 3

FeOOH and 85 wt% concentrated $H_3PO_4$ were mixed in a reactor such that the molar ratio of Fe to P was 1:2.55, and a dopant, $TiO_2$, was added such that the amount of Ti was 0.4 mol% based on the total moles of the positive electrode active material. Subsequently, distilled water was added so that the total weight of FeOOH and $H_3PO_4$ in the slurry became 40 wt%. The mixture was then stirred at 60°C for 8 hours to obtain a slurry comprising an Fe-P composite.

$Mn_3O_4$ and $H_2O_2$ were added to the slurry such that the molar ratio of Fe, Mn, and $H_2O_2$ was 4:6:5. The mixture was further stirred at 60°C for 8 hours to obtain a slurry comprising an Fe-Mn-P composite.

Lithium raw material $Li_2CO_3$ and carbon raw material glucose were added to the slurry such that the molar ratio of Fe, Li, and C was 1:2.55:1, thereby obtaining a precipitate. Subsequently, the slurry was dried using a spray dryer.

The dried mixture was subjected to heat treatment in a furnace under a nitrogen atmosphere by increasing the temperature at a rate of 2°C/min and maintaining the temperature at 650°C for 10 hours. After the heat treatment, the mixture was pulverized using a jet mill so that D50 was 1.0 $\mu$m or less. The resulting material was then furnace-cooled and classified to obtain a positive electrode active material comprising lithium iron manganese phosphate.

(4) Example 4

FeOOH and 85 wt% concentrated $H_3PO_4$ were mixed in a reactor such that the molar ratio of Fe to P was 1:2.55. Then, distilled water was added so that the total weight of FeOOH and $H_3PO_4$ in the slurry became 40 wt%. The mixture was stirred at 60°C for 8 hours to obtain a slurry comprising an Fe-P composite.

$Mn_3O_4$ and $H_2O_2$ were added to the slurry such that the molar ratio of Fe, Mn, and $H_2O_2$ was 4:6:5, and a dopant, $TiO_2$, was added such that the amount of Ti was 0.4 mol% based on the total moles of the positive electrode active material. The mixture was then further stirred at 60°C for 8 hours to obtain a slurry comprising an Fe-Mn-P composite.

Lithium raw material $Li_2CO_3$ and carbon raw material glucose were added to the slurry such that the molar ratio of Fe, Li, and C was 1:2.55:1, thereby obtaining a precipitate. Subsequently, the slurry was dried using a spray dryer.

The dried mixture was heat-treated in a furnace under a nitrogen atmosphere by increasing the temperature at a rate of 2°C/min and maintaining the temperature at 650°C for 10 hours. After the heat treatment, the mixture was pulverized using a jet mill so that D50 was 1.0 $\mu$m or less. The resulting material was then furnace-cooled and classified to obtain a positive electrode active material comprising lithium iron manganese phosphate.

(5) Comparative Example 1

FeOOH, 85 wt% concentrated $H_3PO_4$, $Mn_3O_4$, and $H_2O_2$ were mixed in a reactor such that the molar ratio of Fe, P, Mn, and $H_2O_2$ was 1:2.55:1.5:1.25. Then, distilled water was added so that the concentration of the above-mentioned raw materials in the slurry became 40 wt% of the total weight. The mixture was stirred at 60°C for 24 hours to obtain a slurry.

Lithium raw material $Li_2CO_3$ and carbon raw material sucrose were added to the slurry such that the atomic ratio of Fe, Li, and C was 1:2.55:1, thereby obtaining a precipitate. Subsequently, the slurry was dried using a spray dryer.

The dried mixture was heat-treated in a furnace under a nitrogen atmosphere by increasing the temperature at a rate of 2°C/min and maintaining the temperature at 650°C for 10 hours. After the heat treatment, the mixture was pulverized using a jet mill so that D50 was 1.0 $\mu$m or less. The resulting material was then furnace-cooled and classified to obtain a positive electrode active material.

(6) Comparative Example 2

FeOOH and 85 wt% concentrated $H_3PO_4$ were mixed in a reactor such that the molar ratio of Fe and P was 1:2.55. Then, distilled water was added so that the FeOOH and $H_3PO_4$ in the slurry accounted for 40 wt% of the total weight. The mixture was stirred at 60°C for 8 hours to obtain a slurry.

$Mn_3O_4$ was then added to the slurry such that the molar ratio of Fe to Mn was 2:3. The mixture was stirred again at 60°C for 8 hours to obtain a slurry.

Lithium raw material $Li_2CO_3$ and carbon raw material glucose were added to the slurry such that the molar ratio of Fe, Li, and C was 1:2.55:1, thereby obtaining a precipitate. Subsequently, the slurry was dried using a spray dryer.

The dried mixture was heat-treated in a furnace under a nitrogen atmosphere by increasing the temperature at a rate of 2°C/min and maintaining it at 650°C for 10 hours. After the heat treatment, the mixture was pulverized using a jet mill so that D50 was 1.0 $\mu$m or less. The resulting material was then furnace-cooled and classified to obtain a positive electrode active material.

(7) Comparative Example 3

$Mn_3O_4$, 85 wt% concentrated $H_3PO_4$, and $H_2O_2$ were added to a reactor such that the molar ratio of Mn, P, and $H_2O_2$ was 1:1.55:1.25. Then, distilled water was added so that the $Mn_3O_4$, $H_3PO_4$, and $H_2O_2$ in the slurry accounted for 40 wt% of the total weight. The mixture was stirred at 60°C for 8 hours to obtain a slurry.

FeOOH was then added to the slurry such that the molar ratio of Mn to Fe was 3:2. The mixture was stirred again at 60°C for 8 hours to obtain a slurry.

Lithium raw material $Li_2CO_3$ and carbon raw material glucose were added to the slurry such that the molar ratio of Fe, Li, and C was 1:2.55:1, thereby obtaining a precipitate. Subsequently, the slurry was dried using a spray dryer.

The dried mixture was heat-treated in a furnace under a nitrogen atmosphere by increasing the temperature at a rate of 2°C/min and maintaining it at 650°C for 10 hours. After the heat treatment, the mixture was pulverized using a jet mill so that D50 was 1.0 $\mu$m or less. The resulting material was then furnace-cooled and classified to obtain a positive electrode active material.

(8) Comparative Example 4

FeOOH, 85 wt% concentrated $H_3PO_4$, and a lithium raw material, $Li_2CO_3$, were added to a reactor such that the molar ratio of Fe, P, and Li was 1:2.55:2.55. Then, distilled water was added so that FeOOH, $H_3PO_4$, and $Li_2CO_3$ in the slurry accounted for 40 wt% of the total weight. The mixture was stirred at 60°C for 8 hours to obtain a slurry comprising an Fe-P composite.

$Mn_3O_4$ and $H_2O_2$ were added to the slurry such that the molar ratio of Fe, Mn, and $H_2O_2$ was 4:6:5. The mixture was stirred again at 60°C for 8 hours to obtain a slurry.

A carbon raw material, glucose, was added to the slurry such that the molar ratio of Fe to C was 1:1, thereby obtaining a precipitate. Subsequently, the slurry was dried using a spray dryer.

The dried mixture was heat-treated in a furnace under a nitrogen atmosphere by increasing the temperature at a rate of 2°C/min and maintaining it at 650°C for 10 hours. After the heat treatment, the mixture was pulverized using a jet mill so that D50 was 1.0 $\mu$m or less. The resulting material was then furnace-cooled and classified to obtain a positive electrode active material.

(9) Comparative Example 5

$Mn_3O_4$ and 85 wt% concentrated $H_3PO_4$ were mixed in a reactor such that the molar ratio of Mn to P was 1:1.55. Then, distilled water was added so that $Mn_3O_4$ and $H_3PO_4$ in the slurry accounted for 40 wt% of the total weight. The mixture was stirred at 60°C for 8 hours to obtain a slurry.

FeOOH and $H_2O_2$ were added to the slurry such that the molar ratio of Fe, Mn, and $H_2O_2$ was 4:6:5. The mixture was stirred again at 60°C for 8 hours to obtain a slurry.

A lithium raw material, $Li_2CO_3$, and a carbon raw material, glucose, were added to the slurry such that the molar ratio of Fe, Li, and C was 1:2.55:1, thereby obtaining a precipitate. The slurry was then dried using a spray dryer.

The dried mixture was heat-treated in a furnace under a nitrogen atmosphere by increasing the temperature at a rate of 2°C/min and maintaining it at 650°C for 10 hours. After the heat treatment, the mixture was pulverized using a jet mill so that D50 was 1.0 $\mu$m or less. The resulting material was then furnace-cooled and classified to obtain a positive electrode active material.

Experimental Example 1. Analysis of characteristics of positive electrode active material

Each of the positive electrode active materials prepared according to Preparation Example 1 was analyzed by XRD using the Rietveld refinement method to identify the proportions of lithium manganese iron phosphate (LMFP) phase, $Fe_2P$ phase, and $Mn_2P_2O_7$ phase. The results are shown in Table 1 below. Meanwhile, the SEM images of Example 1 and Comparative Example 4 are shown in FIG. 2.

[Table 1]

| Classification | Ex.1 | Ex.2 | Ex.3 | Ex.4 | Comp. Ex.1 | Comp. Ex.2 | Comp. Ex.3 | Comp. Ex.4 | Comp. Ex.5 |
|---|---|---|---|---|---|---|---|---|---|
| LMFP (wt%) | 99.41 | 99.48 | 99.54 | 99.54 | 96.52 | 96.27 | 96.45 | 87.57 | 89.12 |
| $Fe_2P$ (wt%) | 0.59 | 0.52 | 0.46 | 0.46 | 0.07 | 0.98 | 0.05 | 7.10 | 6.60 |
| $Mn_2P_2O_7$ (wt%) | 0.00 | 0.00 | 0.00 | 0.00 | 3.41 | 2.75 | 3.50 | 5.33 | 4.28 |

Additionally, based on the XRD results of each positive electrode active material prepared according to Preparation Example 1, the unit cell volume ($V_c$), the length of the a-axis ($l_a$), the length of the b-axis ($l_b$), and the length of the c-axis ($l_c$) were measured. Then, the cell characteristic values $A_p$ to $C_p$ were calculated according to the following Equations 1' to 3', and the results are shown in Table 2 below.

$$[\text{Equation 1'}]$$

$$A_p = V_c / l_a$$

[Equation 2']

$$B_p = V_c / l_b$$

[Equation 3']

$$C_p = V_c / l_c$$

[Table 2]

| Classification | Ex.1 | Ex.2 | Ex.3 | Ex.4 | Comp. Ex.1 | Comp. Ex.2 | Comp. Ex.3 | Comp. Ex.4 | Comp. Ex.5 |
|---|---|---|---|---|---|---|---|---|---|
| $A_p$ (Å$^2$) | 28.60 | 28.67 | 28.62 | 28.66 | 28.75 | 28.11 | 28.66 | 28.18 | 29.38 |
| $B_p$ (Å$^2$) | 62.95 | 63.08 | 63.00 | 63.07 | 63.08 | 62.48 | 63.07 | 62.04 | 63.67 |
| $C_p$ (Å$^2$) | 49.07 | 49.16 | 49.10 | 49.14 | 49.16 | 48.40 | 49.24 | 48.45 | 49.93 |

Referring to Tables 1 and 2, it can be seen that when excessive reduction occurs due to carbon at high temperature, $Fe_2P$ may be generated.

Additionally, when the M-P phase is unstable, as in the case of the comparative example, an $M_2P_2O_7$ phase (where M = Fe or Mn) may be generated due to a decrease in the reactivity of lithium during the calcination. The $M_2P_2O_7$ phase acts as a resistor, which can deteriorate output characteristics and reduce capacity. Among them, $Mn_2P_2O_7$ may cause manganese elution during charge and discharge, thereby degrading battery stability.

Meanwhile, the cell characteristic values may vary depending on the atomic arrangement of Fe and Mn. For example, different cell characteristic values may be exhibited depending on whether Fe and Mn are homogeneous, in a Mn-rich phase, or in a Fe-rich phase.

It was confirmed that the positive electrode active material prepared in the examples had cell characteristic values within the ranges of 28.10 Å$^2 \leq A_p \leq$ 28.74 Å$^2$, 62.40 Å$^2 \leq B_p \leq$ 63.10 Å$^2$, and 48.50 Å$^2 \leq C_p \leq$ 49.20 Å$^2$.

Preparation Example 2. Manufacture of lithium secondary battery

94 wt% of each positive electrode active material prepared according to Preparation Example 1, 3 wt% of artificial graphite, and 3 wt% of a PVDF binder were dispersed in 3.5 g of N-methyl-2 pyrrolidone (NMP) to prepare a positive electrode slurry. The positive electrode slurry was applied on an aluminum (Al) thin film, as a positive electrode current collector, with a thickness of 20 μm, and then dried and roll pressed to manufacture a positive electrode.

A coin battery was manufactured using a lithium foil as a counter electrode to the positive electrode, a porous polyethylene membrane (Celgard 2300, thickness: 25 μm) as a separator, and a liquid electrolyte in which $LiPF_6$ was dissolved at a concentration of 1.15 M in a mixed solvent of ethylene carbonate and ethyl methyl carbonate at a volume ratio of 3:7 according to a commonly known manufacturing process.

Experimental Example 2: Evaluation of characteristics of positive electrode active material

For the coin batteries manufactured in Preparation Example 2, charge/discharge experiments were performed using an electrochemical analysis device (Toscat-3100 from TOYO SYSTEM CO., LTD.) at 25 °C, a voltage range of 2.0 to 3.65 V, and a discharge rate of 0.1 to 5.0 C to measure discharge capacity. The cycle performance was evaluated by repeatedly charging and discharging 100 times at a current of 1.0 C within a voltage range of 2.0 to 3.65 V, and the ratio of the discharge capacity after the 100th cycle to the initial capacity was calculated. In addition, a charge/discharge test was conducted at -20°C, voltage range 2.0 to 3.65 V, and a discharge rate of 0.1 C. The results of the analysis are shown in Table 3 below.

[Table 3]

| Classification | Ex.1 | Ex.2 | Ex.3 | Ex.4 | Comp. Ex.1 | Comp. Ex.2 | Comp. Ex.3 | Comp. Ex.4 | Comp. Ex.5 |
|---|---|---|---|---|---|---|---|---|---|
| 0.1 C Discharge Capacity (mAh/g) | 152.5 | 153.7 | 152.1 | 153.5 | 143.1 | 138.1 | 147.6 | 128.5 | 121.6 |
| 5 C Discharge Capacity (mAh/g) | 122 | 126.3 | 124.3 | 124.5 | 100.2 | 98.1 | 107.7 | 81 | 79.5 |
| 100-Cycle Lifespan (%) | 98.4 | 99.5 | 99.1 | 98.7 | 88.1 | 87.5 | 86.9 | 80.0 | 82.4 |
| -20°C, 0.1 C Discharge Capacity (mAh/g) | 129.9 | 130.0 | 134.7 | 134.8 | 108.6 | 109.6 | 106.1 | 106.0 | 109.9 |

Referring to Tables 1 through 3 and FIG. 2, it can be confirmed that in the positive electrode active material according to the embodiment, the $Fe_2P$ phase, which exhibits excellent electronic and ionic conductivity, is uniformly distributed, thereby providing high conductivity as well as sufficient capacity. In contrast, in the positive electrode active material of the comparative example, the $Fe_2P$ phase is present only in a trace amount, resulting in no improvement in performance, or, as observed in FIG. 2, the $Fe_2P$ phase is agglomerated outside the particles or present in an excessively large amount, thereby deteriorating both conductivity and capacity.

According to the present disclosure, a positive electrode active material having excellent electrical conductivity and energy density can be obtained.

In addition, according to the present disclosure, a positive electrode active material having excellent stability under low-temperature and high-current conditions, as well as superior capacity and cycle life characteristics, can be obtained.

In addition to the above-described effects, specific effects of the present disclosure are described above while explaining the specific details for implementing the descriptions the specification.

While the embodiments of the present disclosure have been described above, it will be apparent to those of ordinary skill in the art that various modifications and changes can be made to the present disclosure without departing from the spirit of the present disclosure as set forth in the claims, including the addition, modification, deletion, or supplementation of components. Such modifications and changes shall also fall within the scope of the present disclosure.

## Claims

1. A positive electrode active material for a lithium secondary battery, comprising a lithium composite compound capable of lithium intercalation and deintercalation,

    wherein the lithium composite compound comprises Fe and Mn,
    wherein the lithium composite compound comprises a plurality of particulate materials,
    and wherein an $Fe_2P$ phase is present in at least a partial region of the particulate materials.

2. The positive electrode active material of claim 1, wherein the particulate materials have an average particle diameter of 0.01 to 5 $\mu$m.

3. The positive electrode active material of claim 1, wherein 50 wt% or more of the total $Fe_2P$ phase contained in the positive electrode active material is located inside the particulate materials.

4. The positive electrode active material of claim 1, wherein the content of the $Fe_2P$ phase is 0.2 to 0.9 wt% based on 100 wt% of the lithium manganese iron phosphate phase included in the lithium composite compound.

5. The positive electrode active material of claim 1, wherein the particulate materials are obtained by pulverizing a non-pulverized lithium composite compound comprising, from the core to the surface:

    a first region in which Fe is present but Mn is not present;
    a second region having a mixed structure of Fe and Mn; and

a third region in which Mn is present but Fe is not present.

6.  The positive electrode active material of claim 5, wherein, in the non-pulverized lithium composite compound, the $Fe_2P$ phase is present in at least a portion of the first region and the second region.

7.  The positive electrode active material of claim 5, wherein the combined thickness of the second region and the third region is 0.5 to 2.0 $\mu$m.

8.  The positive electrode active material of claim 1, wherein the total content of the $Fe_2P_2O_7$ phase and the $Mn_2P_2O_7$ phase in the particulate materials is 2.5 wt% or less, based on 100 wt% of the lithium manganese iron phosphate phase included in the lithium composite compound.

9.  The positive electrode active material of claim 1, wherein the content of the $Mn_2P_2O_7$ phase in the particulate materials is 2.5 wt% or less, based on 100 wt% of the lithium manganese iron phosphate phase included in the lithium composite compound.

10. The positive electrode active material of claim 1, wherein the particulate materials satisfy at least one of the following conditions represented by Equations 1 to 3:

$$[\text{Equation 1}]$$

$$28.10 \text{ Å}^2 \le A_p \le 28.74 \text{ Å}^2$$

$$[\text{Equation 2}]$$

$$62.40 \text{ Å}^2 \le B_p \le 63.10 \text{ Å}^2$$

$$[\text{Equation 3}]$$

$$48.50 \text{ Å}^2 \le C_p \le 49.20 \text{ Å}^2$$

where $A_p$ to $C_p$ in Equations 1 to 3 are calculated according to the following Equations 1' to 3':

$$[\text{Equation 1'}]$$

$$A_p = V_c/l_a$$

$$[\text{Equation 2'}]$$

$$B_p = V_c/l_b$$

$$[\text{Equation 3'}]$$

$$C_p = V_c/l_c$$

In Equations 1' to 3',

$V_c$ is the unit cell volume of the particulate material, and
$l_a$, $l_b$, and $l_c$ represent the diameters along the a-axis, b-axis, and c-axis of the particulate material, respectively.

11. The positive electrode active material of claim 1, wherein the lithium composite compound is represented by Chemical Formula 1 below:

[Chemical Formula 1]     $Li_pFe_{1-x-y}Mn_xA_yA'_zP_{1-z}O_w$

where

A is at least one element selected from the group consisting of Ag, Al, As, Au, Ba, Be, Bi, Ca, Cd, Ce, Co, Cr, Cu, Ga, Hf, In, K, La, Mg, Mo, Na, Nb, Nd, Ni, Os, Pd, Pr, Pt, Rh, Ru, Sm, Sn, Sr, Ta, Ti, V, W, Y, Zn, and Zr,

A' is at least one element selected from the group consisting of C, Si, S, N, B, F, Cl, and I, and

$$0.5 \leq p \leq 1.5, \ 0 < x < 1, \ 0 \leq y < 1, \ 0 \leq z < 1, \ 0 < w \leq 4.$$

12. The positive electrode active material of claim 1, wherein at least a portion of the particulate materials has an amorphous carbon coating layer with a thickness of 1 to 500 nm formed on at least a part of the surface.

13. A positive electrode comprising the positive electrode active material according to any one of claims 1 to 12.

14. A lithium secondary battery using the positive electrode according to claim 13.

FIG. 1

FIG. 2

Europäisches
Patentamt

European
Patent Office

Office européen
des brevets

# EUROPEAN SEARCH REPORT

**Application Number**

EP 25 19 7550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIN HONGBO ET AL: "Dual Modification of Olivine LiFe 0.5 Mn 0.5 PO 4 Cathodes with Accelerated Kinetics for High-Rate Lithium-Ion Batteries", INDUSTRIAL & ENGINEERING CHEMISTRY RESEARCH, vol. 62, no. 2, 3 January 2023 (2023-01-03), pages 1029-1034, XP093315139, ISSN: 0888-5885, DOI: 10.1021/acs.iecr.2c04303 Retrieved from the Internet: URL:https://pubs.acs.org/doi/pdf/10.1021/acs.iecr.2c04303> * abstract * * paragraph [EXPERIMENTALSECTION] * * figures 1e,2 * ----- | 1-9, 11-14 | INV. C01B25/45 H01M4/48 H01M10/0525 |
| X | CN 114 142 007 A (HUBEI HUNDRED MILLION WEFT POWER CO LTD) 4 March 2022 (2022-03-04) * abstract * * claims 1-10 * * example 1 * * paragraph [0019] * ----- | 1-9, 11-14 | |
| X | CN 116 154 137 A (SVOLT ENERGY TECH CO LTD) 23 May 2023 (2023-05-23) * abstract * * claims 1-10 * * figure 1 * * paragraph [0012] * ----- | 1-3,5-9, 11-14 | TECHNICAL FIELDS SEARCHED (IPC) C01B H01M |
| X | US 10 020 509 B2 (SAMSUNG SDI CO LTD [KR]) 10 July 2018 (2018-07-10) * abstract * * claims 1-11 * * paragraph [BACKGROUND] * ----- -/-- | 1,5-7, 11-14 | |

The present search report has been drawn up for all claims

| Place of search | Date of completion of the search | Examiner |
|---|---|---|
| The Hague | 7 January 2026 | Mertins, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 1 of 2

EUROPEAN SEARCH REPORT

Application Number

EP 25 19 7550

Europäisches
Patentamt

European
Patent Office

Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIAO SHUNPAN ET AL: "Selection of nitrogen source and PVP-assisted sol-gel method synthesis of LiFeMnPO/C as cathode material for lithium ion batteries", IONICS, KIEL, DE, vol. 26, no. 11, 14 July 2020 (2020-07-14), pages 5405-5415, XP037268624, ISSN: 0947-7047, DOI: 10.1007/S11581-020-03679-2 [retrieved on 2020-07-14] * abstract * * paragraph [EXPERIMENTALSECTION] * * table 2 * ----- | 1,10 | |

TECHNICAL FIELDS
SEARCHED      (IPC)

The present search report has been drawn up for all claims

| Place of search | Date of completion of the search | Examiner |
|---|---|---|
| The Hague | 7 January 2026 | Mertins, Frédéric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 ...................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 7550

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2026

| Patent document cited in search report | | Publication date | Patent family member(s) | | Publication date |
|---|---|---|---|---|---|
| CN 114142007 | A | 04-03-2022 | NONE | | |
| CN 116154137 | A | 23-05-2023 | CN | 116154137 A | 23-05-2023 |
| | | | EP | 4679531 A1 | 14-01-2026 |
| | | | US | 2025282619 A1 | 11-09-2025 |
| | | | WO | 2024183803 A1 | 12-09-2024 |
| US 10020509 | B2 | 10-07-2018 | CN | 105939963 A | 14-09-2016 |
| | | | KR | 20150080113 A | 09-07-2015 |
| | | | TW | 201524898 A | 01-07-2015 |
| | | | US | 2016329565 A1 | 10-11-2016 |
| | | | WO | 2015102200 A1 | 09-07-2015 |

EPO FORM P0459

For more details about this annex : see Official Journal of the European Patent Office, No. 12/82